# FASCICULE DE BREVET EUROPEEN

(11) **EP 2 480 435 B1**
(45) Date de publication et mention de la délivrance du brevet: **03.07.2013**
(21) Numéro de dépôt: 10773123.4
(22) Date de dépôt: 24.09.2010
(51) Int. Cl.: B60T 7/04, B60T 7/06, B60T 13/58

(54) **DISPOSITIF DE FREINAGE MIXTE A COMMANDE OPTIMISEE**
BREMSGEBER FÜR KOMBIBREMSSYSTEM
BRAKE CONTROL DEVICE FOR COMBINED BRAKE SYSTEM

(30) Priorité: 25.09.2009 FR 0956647
(43) Date de publication de la demande: 01.08.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: WALSER, Daniel, CH-1752 Villars-sur-Glâne (CH)
(86) Numéro de dépôt international: PCT/FR2010/052015
(87) Numéro de publication internationale: WO 2011/036422

(56) Documents cités:
- WO-A1-2008/092274
- GB-A- 2 449 984

## Description

L'invention concerne, de façon générale, les techniques de freinage.

Plus précisément, l'invention concerne un dispositif de freinage comprenant des moyens de freinage dissipatif à circuit de commande hydraulique, des moyens de freinage électrique à récupération d'énergie, et au moins un premier actionneur sélectivement déplacé, à partir d'une position de repos et à l'encontre d'une première force élastique exercée par au moins un premier organe de rappel, pour actionner le circuit de commande hydraulique des moyens de freinage dissipatif.

Des dispositifs de ce type sont par exemple décrits dans les documents de brevets US 2008/0173490, GB 2449 984 A, et FR 2 909 957.

La coexistence, sur un même véhicule et le plus souvent sur des véhicules hybrides, d'un système de freinage dissipatif et d'un système de freinage électrique à récupération, pose plusieurs problèmes, et notamment celui du choix des principes à appliquer pour coordonner et répartir les efforts de freinage exercés par ces deux systèmes, et celui de la conception des moyens à mettre en oeuvre pour appliquer ces principes.

Le premier document de brevet précité, US 2008/0173490, propose d'actionner les deux systèmes au moyen d'une pédale de frein classique, tout en retardant l'actionnement du système de freinage dissipatif au moyen d'un organe de transmission à frottement visqueux.

Cet organe à frottement visqueux opère une transmission partielle, vers le système de freinage dissipatif, de l'effort exercé sur la pédale de frein, la proportion de l'effort transmis variant en fonction de la vitesse d'actionnement de la pédale.

Le second document de brevet précité, FR 2 909 957, propose lui aussi d'actionner les deux systèmes à partir d'une pédale de frein classique, le système de freinage électrique étant toutefois piloté de façon automatique à partir de données représentatives de l'actionnement de cette pédale de frein.

Chacune des solutions connues par les documents de brevets précités mettent en oeuvre des moyens relativement complexes.

De plus, la fiabilité des solutions proposées, à la fois au cours du temps, et en cas de défaillance du système de freinage électrique, est très difficile à assurer.

Dans ce contexte, la présente invention a pour but de proposer un dispositif de freinage comprenant des moyens de freinage dissipatif et des moyens de freinage électrique à récupération d'énergie qui soit exempt de l'un au moins des inconvénients mentionnés ci-dessus.

A cette fin, le dispositif de freinage de l'invention, par ailleurs conforme à la définition générique qu'en donne le préambule ci-dessus, est essentiellement caractérisé en ce qu'il comprend en outre un deuxième actionneur, un deuxième organe de rappel, et un capteur de position, en ce que le deuxième actionneur est sélectivement déplacé, à partir d'une position de repos et à l'encontre d'une deuxième force élastique exercée par le deuxième organe de rappel, pour actionner les moyens de freinage électrique, en ce que les positions de repos des premier et deuxième actionneurs sont séparées par une distance non nulle, en ce que ces premier et deuxième actionneurs présentent des trajectoires de déplacement respectives telles que le deuxième actionneur entraîne mécaniquement le premier actionneur après avoir atteint une position d'entraînement séparée de sa position de repos par ladite distance non nulle, en ce que la deuxième force de rappel est inférieure à la première force de rappel, et en ce que le capteur de position délivre un signal de sortie utilisé pour l'actionnement des moyens de freinage électrique et variant en fonction de la position du deuxième actionneur entre sa position de repos et sa position d'entraînement.

Grâce à cet agencement, le freinage électrique est exploité à 100% de ses possibilités avant même que le freinage à dissipation ne soit sollicité.

De plus, le dispositif de freinage de l'invention est aisément contrôlable de façon intuitive par le conducteur, qui exerce spontanément et naturellement sur la pédale de frein l'effort qui correspond à la décélération qu'il souhaite réellement obtenir.

Dans un premier mode de réalisation de l'invention, il est prévu que le premier actionneur comprenne une première pédale incluant un premier levier monté à rotation sur un support et un premier patin d'appui fixé à ce premier levier, que le deuxième actionneur comprenne une deuxième pédale incluant un deuxième levier et un deuxième patin d'appui fixé à ce deuxième levier, que le deuxième levier soit monté à rotation sur le premier levier, et que le deuxième patin coiffe le premier patin au moins dans la position d'entraînement du deuxième actionneur.

Dans ce cas, le capteur comprend par exemple un capteur de rotation, sensible au déplacement angulaire du deuxième levier par rapport au premier levier.

En outre, ce dispositif peut comprendre un interrupteur électrique de feu de freinage monté sur l'un des premier et second leviers et sensible au mouvement relatif de rotation de ces leviers.

Dans un deuxième mode de réalisation de l'invention, il est prévu que le premier actionneur comprenne un piston monté coulissant dans un maître-cylindre du circuit de commande hydraulique des moyens de freinage dissipatif, ce piston étant rappelé dans sa position de repos par le premier organe de rappel, que ce piston présente une face d'appui et une première butée espacée de la face d'appui, que le deuxième actionneur comprenne une tige de poussée présentant une extrémité libre, une deuxième butée, et une extrémité liée, que cette tige soit sélectivement entraînée, par son extrémité liée, au moyen d'une pédale de freinage montée à rotation sur un support et dont l'actionnement induit un coulissement de l'extrémité libre de la tige de poussée par rapport à ladite première butée, que, dans la position de repos du deuxième actionneur, l'extrémité libre de la tige de poussée soit séparée de la face d'appui du piston par ladite distance non nulle, et que le deuxième organe de rappel soit disposé entre les première et deuxième butées.

Dans ce cas, le capteur comprend par exemple un capteur de rotation, sensible au déplacement angulaire de la pédale de freinage par rapport au support.

Cependant, ce capteur peut aussi comprendre un capteur de position linéaire délivrant un signal de sortie qui varie avec la position de la deuxième butée par rapport à la première butée.

Il est en outre judicieux de prévoir que l'extrémité libre de la tige de poussée soit au moins partiellement sphérique, la tige de poussée étant alors guidée dans le maître-cylindre par son extrémité libre.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma illustrant un premier mode de réalisation possible de l'invention; et
- la figure 2 est un schéma illustrant un deuxième mode de réalisation possible de l'invention.

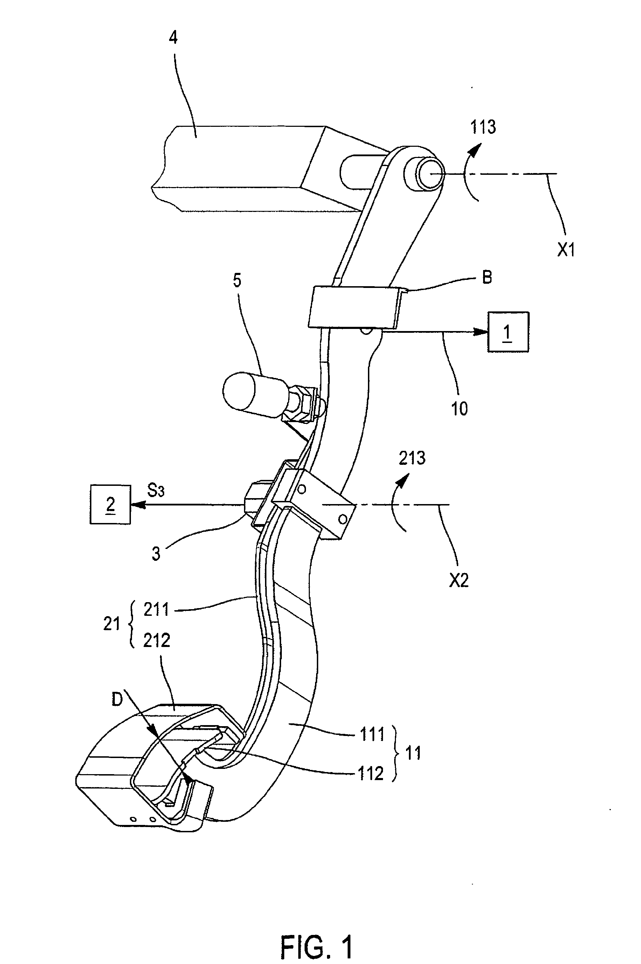

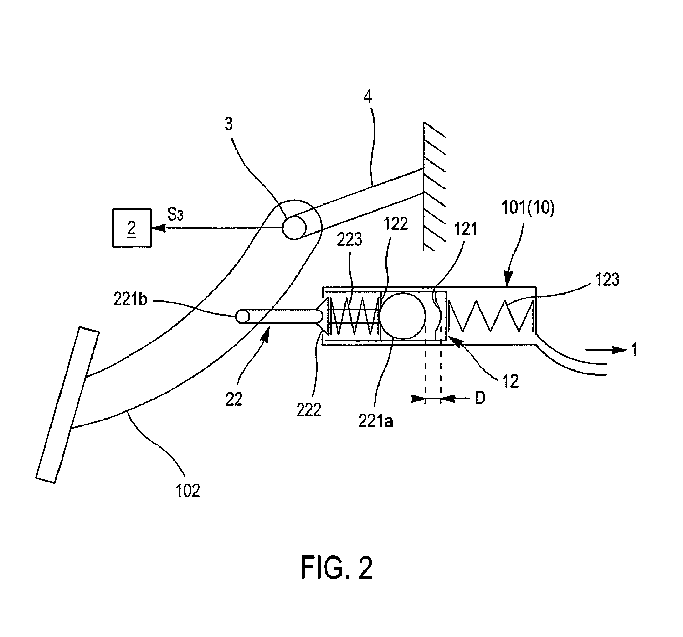

Comme annoncé précédemment, l'invention concerne un dispositif de freinage pour un véhicule terrestre, ce dispositif comprenant deux types 1 et 2 de systèmes de freinage, et au moins un actionneur, tel que 11 (figure 1) ou 12 (figure 2) conçu pour recevoir, de la part du conducteur du véhicule, une commande de freinage permettant de contrôler la décélération de ce véhicule.

Le système de freinage 1 est typiquement constitué de moyens de freinage à dissipation d'énergie, transformant l'énergie cinétique du véhicule en chaleur et utilisant par exemple la friction d'un patin sur un disque de frein ou d'un segment sur un tambour de frein.

Le système de freinage 2 est typiquement constitué de moyens de freinage électrique à récupération d'énergie, utilisant de façon connue une machine électrique transformant l'énergie cinétique du véhicule en une énergie électrique généralement utilisée immédiatement pour le rechargement de batteries embarquées.

Ce dispositif de freinage comprend également un circuit de commande hydraulique 10 conçu pour transmettre la commande de freinage émise par le conducteur sur l'actionneur 11 ou 12, cet actionneur étant déplacé à volonté par le conducteur, depuis une position de repos, à l'encontre d'une force élastique notamment exercée par un ou plusieurs organes de rappel tels que 113 (figure 1) et / ou 123 (figure 2).

En réalité, pour des raisons de simplicité de représentation, la figure 1 n'illustre pas directement l'organe de rappel 113 proprement dit, mais seulement le couple élastique de rappel notamment exercé par cet organe.

Le dispositif de l'invention comprend en outre un deuxième actionneur tel que 21 (figure 1) ou 22 (figure 2), un deuxième organe de rappel tel que 213 (figure 1) ou 223 (figure 2), et un capteur de position 3.

En réalité, toujours pour des raisons de simplicité de représentation, la figure 1 n'illustre pas directement l'organe de rappel 213 proprement dit, mais seulement le couple élastique de rappel exercé par cet organe.

Le deuxième actionneur 21 ou 22 est conçu pour recevoir la commande de freinage émise par le conducteur du véhicule.

Sous l'effet de cette commande, exercée par le conducteur à l'encontre de la force élastique qui est développée par le deuxième organe de rappel 213 ou 223, et dont l'amplitude est inférieure à la force élastique de rappel s'exerçant sur le premier actionneur 11 ou 12, le deuxième actionneur 21 ou 22 est déplacé de la position de repos qu'il occupe par défaut, et actionne les moyens de freinage électrique 2.

Comme le montrent les figures 1 et 2, les positions de repos des deux actionneurs, à savoir 11 et 21 d'une part, et 12 et 22 d'autre part, sont séparées l'une de l'autre par une distance non nulle D.

Par ailleurs, les actionneurs 11, 21 et 12, 22 présentent des trajectoires de déplacement respectives telles que le deuxième actionneur 21 ou 22 entraîne mécaniquement le premier actionneur 11 ou 12 après avoir atteint une position d'entraînement séparée de sa position de repos par la distance non nulle D.

Le capteur de position 3 est conçu pour délivrer un signal de sortie S3 qui est utilisé pour l'actionnement des moyens de freinage électrique 2 et qui est représentatif de l'amplitude du déplacement subi par le deuxième actionneur 21 ou 22 depuis sa position de repos.

Le signal de sortie S3 peut être constitué par un signal analogique, ou par un signal numérique codé sur plusieurs bits, la résolution dépendant notamment du montage.

Dans le premier mode de réalisation de l'invention, qui est illustré à la figure 1, le premier actionneur est essentiellement constitué par une pédale 11.

Cette pédale 11 comprend elle-même un levier 111 monté à rotation sur un support 4 autour d'un axe X1, et un patin d'appui 112 fixé à une extrémité libre de ce levier 111.

L'organe de rappel repéré par la référence 113, qui comprend typiquement un ressort agissant entre le support 4 et la pédale 11, contribue à exercer sur cette pédale 11 un couple de rotation autour de l'axe X1, qui sollicite en permanence cette pédale 11 vers une butée B, fixe par rapport au support 4.

Le deuxième actionneur est lui aussi essentiellement constitué par une pédale 21, cette deuxième pédale incluant un levier 211 et un patin d'appui 212 fixé à une extrémité libre de ce levier 211.

Le levier 211 de la deuxième pédale 21 est monté à rotation sur le levier 111 de la première pédale 11, autour d'un axe X2 porté par ce levier 111.

L'organe de rappel repéré par la référence 213, qui est typiquement constitué par un ressort agissant entre les leviers 111 et 211 des pédales 11 et 21, exerce sur le levier 211 un couple de rotation autour de l'axe X2, qui sollicite en permanence ce levier 211 dans le même sens que celui dans lequel l'organe de rappel 113 sollicite la pédale 11.

En revanche, la force de rappel exercée sur le patin 212 par le couple de rappel qui sollicite le levier 211 autour de l'axe X2 est inférieure à la force de rappel exercée sur le patin 112 par le couple de rappel qui sollicite le levier 111 de la première pédale 11 autour de l'axe X1.

Le patin 212 de la deuxième pédale 21 coiffe le patin 112 de la première pédale 11 au moins dans la position d'entraînement de cette deuxième pédale 21, mais éventuellement aussi dans sa position de repos comme illustré à la figure 1.

Le capteur 3 est alors par exemple essentiellement constitué par un capteur de rotation, sensible au déplacement angulaire, autour de l'axe X2, du levier 211 de la deuxième pédale 21 par rapport au levier 111 de la première pédale 11.

Aussi longtemps que la commande de freinage se traduit par un déplacement du patin d'appui 212 sur une course inférieure à la distance D qui sépare au repos ce patin 212 du patin d'appui 112 de la pédale 11, seul est activé le système de freinage électrique 2, qui produit un couple de freinage défini par la valeur du signal de sortie S3 du capteur 3 et croissant avec la course d'actionnement du patin d'appui 212.

En revanche, lorsque la commande de freinage est telle que le patin d'appui 212 de la pédale 21 atteint le patin d'appui 112 de la pédale 11 et déplace cette pédale 11 à l'encontre de la force de rappel exercée par l'organe de rappel 113, la pression s'élève dans le circuit de commande hydraulique 10 et provoque en plus l'activation du système de freinage dissipatif 1.

Comme illustré à la figure 1, le dispositif conforme au premier mode de réalisation de l'invention peut aussi comprendre un interrupteur électrique 5 de feu de freinage, cet interrupteur étant par exemple monté sur le levier 211, étant sensible au mouvement relatif de rotation de ce levier 211 par rapport au levier 111, et remplissant en outre la fonction d'une butée permettant de limiter l'amplitude du mouvement de rotation de ces leviers 111 et 211 l'un par rapport à l'autre autour de l'axe X2 sous l'effet du couple exercé par l'organe de rappel 213.

Dans le deuxième mode de réalisation de l'invention, qui est illustré à la figure 2, le premier actionneur est essentiellement constitué par un piston 12 présentant une face d'appui 121 et une butée 122, espacée de cette face d'appui 121.

Ce piston 12, qui est monté coulissant dans un maître-cylindre 101 appartenant au circuit de commande hydraulique 10 du système de freinage dissipatif 1, est rappelé dans sa position de repos par l'organe de rappel 123 typiquement constitué par un ressort hélicoïdal précontraint.

Le deuxième actionneur est essentiellement constitué par une tige de poussée 22, cette tige 22 présentant une extrémité libre 221a, une deuxième butée 222, et une extrémité liée 221b.

Le système de freinage 1 comprend par ailleurs une pédale 102 montée à rotation sur un support 4, conçue pour être actionnée par le conducteur du véhicule, et sur laquelle est articulée l'extrémité liée 221b de la tige de poussée 22.

Le deuxième organe de rappel est essentiellement constitué par un ressort hélicoïdal 223 disposé entre la butée 222 de la tige de poussée 22 et la butée 122 du piston 12, cet organe de rappel 223 exerçant une force élastique de rappel inférieure à la force élastique de rappel exercée notamment par le premier organe de rappel 123 sur le piston 12.

Dans ces conditions, l'actionnement de la pédale de freinage 102 a pour effet d'entraîner la tige de poussée 22, dont l'extrémité libre 221a coulisse alors par rapport à la butée 122 et se rapproche de la face d'appui 121.

Le capteur 3 peut cette fois encore être essentiellement constitué par un capteur de rotation, sensible au déplacement angulaire de la pédale de freinage 102 par rapport au support 4.

Néanmoins, le capteur 3 peut aussi être constitué d'un capteur de position linéaire, dont le signal de sortie S3 varie avec la position de la deuxième butée 222 par rapport à la première butée 122, c'est-à-dire en fonction de la longueur du ressort hélicoïdal 223.

Comme le montre la figure 2, l'extrémité libre 221a de la tige de poussée 22 prend au moins partiellement la forme d'une sphère, de sorte que la tige de poussée 22 peut être guidée dans le maître-cylindre 101 par son extrémité libre 221a.

Aussi longtemps que la commande de freinage se traduit par un coulissement de l'extrémité libre 221a de la tige de poussée 22 sur une course inférieure à la distance D qui sépare au repos cette extrémité libre 221a de la face d'appui 121 du piston 12, seul est activé le système de freinage électrique 2, qui produit un couple de freinage défini par la valeur du signal de sortie du capteur 3 et croissant avec la course d'actionnement de la tige de poussée 22.

En revanche, lorsque la commande de freinage est telle que l'extrémité libre 221a de la tige de poussée 22 atteint la face d'appui 121 du piston 12 et déplace ce piston à l'encontre de la force de rappel exercée par le ressort 123, la pression s'élève dans le circuit de commande hydraulique 10 et provoque en plus l'activation du système de freinage dissipatif 1.

## Revendications

1. Dispositif de freinage comprenant des moyens de freinage dissipatif (1) à circuit de commande hydraulique (10), des moyens de freinage électrique (2) à récupération d'énergie, et au moins un premier actionneur (11, 12) sélectivement déplacé, à partir d'une position de repos et à l'encontre d'une première force élastique exercée par au moins un premier organe de rappel (113, 123), pour actionner le circuit de commande hydraulique des moyens de freinage dissipatif (1), **caractérisé en ce qu'**il comprend en outre un deuxième actionneur (21, 22), un deuxième organe de rappel (213, 223), et un capteur de position (3), **en ce que** le deuxième actionneur (21, 22) est sélectivement déplacé, à partir d'une position de repos et à l'encontre d'une deuxième force élastique exercée par le deuxième organe de rappel (213, 223), pour actionner les moyens de freinage électrique (2), **en ce que** les positions de repos des premier et deuxième actionneurs (11, 12; 21, 22) sont séparées par une distance non nulle (D), **en ce que** ces premier et deuxième actionneurs (11, 12; 21, 22) présentent des trajectoires de déplacement respectives telles que le deuxième actionneur (21, 22) entraîne mécaniquement le premier actionneur (11, 12) après avoir atteint une position d'entraînement séparée de sa position de repos par ladite distance non nulle (D), **en ce que** la deuxième force de rappel est inférieure à la première force de rappel, et **en ce que** le capteur de position (3) délivre un signal de sortie (S3) utilisé pour l'actionnement des moyens de freinage électrique (2) et variant en fonction de la position du deuxième actionneur (21, 22) entre sa position de repos et sa position d'entraînement.

2. Dispositif suivant la revendication 1, **caractérisé en ce que** le premier actionneur (11, 12) comprend une première pédale (11) incluant un premier levier (111) monté à rotation sur un support (4) et un premier patin d'appui (112) fixé à ce premier levier (111), **en ce que** le deuxième actionneur (21, 22) comprend une deuxième pédale (21) incluant un deuxième levier (211) et un deuxième patin d'appui (212) fixé à ce deuxième levier (211), **en ce que** le deuxième levier (211) est monté à rotation sur le premier levier (111), et **en ce que** le deuxième patin (212) coiffe le premier patin (112) au moins dans la position d'entraînement du deuxième actionneur (21).

3. Dispositif suivant la revendication 2, **caractérisé en ce que** ledit capteur (3) comprend un capteur de rotation (3), sensible au déplacement angulaire du deuxième levier (211) par rapport au premier levier (111).

4. Dispositif suivant l'une quelconque des revendications 2 et 3, **caractérisé en ce qu'**il comprend en outre un interrupteur électrique (5) de feu de freinage monté sur l'un des premier et second leviers (111, 211) et sensible au mouvement relatif de rotation de ces leviers (111, 211).

5. Dispositif suivant la revendication 1, **caractérisé en ce que** le premier actionneur (11, 12) comprend un piston (12) monté coulissant dans un maître-cylindre (101) du circuit de commande hydraulique (10) des moyens de freinage dissipatif (1), ce piston (12) étant rappelé dans sa position de repos par le premier organe de rappel (123), **en ce que** ce piston (12) présente une face d'appui (121) et une première butée (122) espacée de la face d'appui (121), **en ce que** le deuxième actionneur (21, 22) comprend une tige de poussée (22) présentant une extrémité libre (221a), une deuxième butée (222), et une extrémité liée (221b), **en ce que** cette tige (22) est sélectivement entraînée, par son extrémité liée (221b), au moyen d'une pédale de freinage (102) montée à rotation sur un support (4) et dont l'actionnement induit un coulissement de l'extrémité libre (221a) de la tige de poussée (22) par rapport à ladite première butée (122), **en ce que**, dans la position de repos du deuxième actionneur (22), l'extrémité libre (221a) de la tige de poussée (22) est séparée de la face d'appui (121) du piston (12) par ladite distance non nulle (D), et **en ce que** le deuxième organe de rappel (223) est disposé entre les première et deuxième butées (122, 222).

6. Dispositif suivant la revendication 5, **caractérisé en ce que** ledit capteur (3) comprend un capteur de rotation (3), sensible au déplacement angulaire de la pédale de freinage (102) par rapport au support (4).

7. Dispositif suivant la revendication 5, **caractérisé en ce que** ledit capteur (3) comprend un capteur de position linéaire, délivrant un signal de sortie (S3) variant avec la position de la deuxième butée (222) par rapport à la première butée (122).

8. Dispositif suivant l'une quelconque des revendications 5 à 7, **caractérisé en ce que** l'extrémité libre (221a) de la tige de poussée (22) est au moins partiellement sphérique, et **en ce que** la tige de poussée (22) est guidée dans le maître-cylindre (101) par son extrémité libre (221a).

## Patentansprüche

1. Bremsvorrichtung, die Einrichtungen zum dissipativen Bremsen (1) mit hydraulischem Steuerstromkreis (10), elektrische Bremseinrichtungen (2) mit Energierückgewinnung, und mindestens einen ersten Stellantrieb (11, 12) enthält, der selektiv ausgehend von einer Ruhestellung und gegen die Wirkung einer ersten elastischen Kraft verschoben wird, die von mindestens einem ersten Rückstellorgan (113, 123) ausgeübt wird, um den hydraulischen Steuerstromkreis der Einrichtungen zum dissipativen Bremsen (1) zu betätigen, **dadurch gekennzeichnet, dass** sie außerdem einen zweiten Stellantrieb (21, 22), ein zweites Rückstellorgan (213, 223) und einen Positionssensor (3) enthält, dass der zweite Stellantrieb (21, 22) selektiv ausgehend von einer Ruhestellung und gegen die Wirkung einer zweiten elastischen Kraft verschoben wird, die vom zweiten Rückstellorgan (213, 223) ausgeübt wird, um die elektrischen Bremseinrichtungen (2) zu betätigen, dass die Ruhestellungen der ersten und zweiten Stellantriebe (11, 12; 21, 22) durch einen Abstand ungleich Null (D) getrennt sind, dass diese ersten und zweiten Stellantriebe (11, 12; 21, 22) solche Verschiebungsbahnen haben, dass der zweite Stellantrieb (21, 22) den ersten Stellantrieb (11, 12) mechanisch antreibt, nachdem er eine Antriebsstellung erreicht hat, die von seiner Ruhestellung um den Abstand ungleich Null (D) getrennt ist, dass die zweite Rückstellkraft geringer ist als die erste Rückstellkraft, und dass der Positionssensor (3) ein Ausgangssignal (S3) liefert, das für die Betätigung der elektrischen Bremseinrichtungen (2) verwendet wird und abhängig von der Stellung des zweiten Stellantriebs (21, 22) zwischen seiner Ruhestellung und seiner Antriebsstellung variiert.

2. Vorrichtung nach Anspruch 1, **dadurch gekennzeichnet, dass** der erste Stellantrieb (11, 12) ein erstes Pedal (11) enthält, das einen ersten Hebel (111), der drehbar auf einen Träger (4) montiert ist, und einen an diesem ersten Hebel (111) befestigten ersten Auflageklotz (112) umfasst, dass der zweite Stellantrieb (21, 22) ein zweites Pedal (21) enthält, das einen zweiten Hebel (211) und einen an diesem zweiten Hebel (211) befestigten zweiten Auflageklotz (212) umfasst, dass der zweite Hebel (211) drehbar auf den ersten Hebel (111) montiert ist, und dass der zweite Klotz (212) den ersten Klotz (112) zumindest in der Antriebsstellung des zweiten Stellantriebs (21) überdeckt.

3. Vorrichtung nach Anspruch 2, **dadurch gekennzeichnet, dass** der Sensor (3) einen Drehsensor (3) enthält, der für die Winkelverschiebung des zweiten Hebels (211) bezüglich des ersten Hebels (111) empfindlich ist.

4. Vorrichtung nach einem der Ansprüche 2 und 3, **dadurch gekennzeichnet, dass** sie außerdem einen elektrischen Bremslichtschalter (5) enthält, der auf einen der ersten und zweiten Hebel (111, 211) montiert und für die relative Drehbewegung dieser ersten und zweiten Hebel (111, 211) empfindlich ist.

5. Vorrichtung nach Anspruch 1, **dadurch gekennzeichnet, dass** der erste Stellantrieb (11, 12) einen Kolben (12) enthält, der in einem Hauptzylinder (101) des hydraulischen Steuerstromkreises (10) der Einrichtungen zum dissipativen Bremsen (1) gleitend montiert ist, wobei dieser Kolben (12) vom ersten Rückstellorgan (123) in seine Ruhestellung zurückgestellt wird, dass dieser Kolben (12) eine Auflageseite (121) und einen ersten Anschlag (122) aufweist, der von der Auflageseite (121) beabstandet ist, dass der zweite Stellantrieb (21, 22) eine Schubstange (22) mit einem freien Ende (221a), einen zweiten Anschlag (222) und einem verbundenen Ende (221b) enthält, und dass diese Stange (22) über ihr verbundenes Ende (221b) mittels eines Bremspedals (102) selektiv angetrieben wird, das drehbar auf einen Träger (4) montiert ist und dessen Betätigung ein Gleiten des freien Endes (221a) der Schubstange (22) bezüglich des ersten Anschlags (122) induziert, dass in der Ruhestellung des zweiten Stellantriebs (22) das freie Ende (221a) der Schubstange (22) von der Auflageseite (121) des Kolbens (12) durch den Abstand ungleich Null (D) getrennt ist, und dass das zweite Rückstellorgan (223) zwischen dem ersten und dem zweiten Anschlag (122, 222) angeordnet ist.

6. Vorrichtung nach Anspruch 5, **dadurch gekennzeichnet, dass** der Sensor (3) einen Drehsensor (3) enthält, der für die Winkelverschiebung des Bremspedals (102) bezüglich des Trägers (4) empfindlich ist.

7. Vorrichtung nach Anspruch 5, **dadurch gekennzeichnet, dass** der Sensor (3) einen linearen Positionssensor enthält, der ein Ausgangssignal (S3) liefert, das mit der Stellung des zweiten Anschlags (222) bezüglich des ersten Anschlags (122) variiert.

8. Vorrichtung nach einem der Ansprüche 5 bis 7, **dadurch gekennzeichnet, dass** das freie Ende (221a) der Schubstange (22) zumindest teilweise kugelförmig ist, und dass die Schubstange (22) im Hauptzylinder (101) durch ihr freies Ende (221a) geführt wird.

## Claims

1. Braking device comprising dissipative braking means (1) having a hydraulic control circuit (10), regenerative electric braking means (2), and at least a first actuating device (11, 12) which is displaced selectively from an inactive position against a first elastic force exerted by at least a first restoring element (113, 123) in order to activate the hydraulic control circuit of the dissipative braking means (1), **characterized in that** it additionally comprises a second actuating device (21, 22), a second restoring element (213, 223), and a position sensor (3), **in that** the second actuating device (21, 22) is displaced selectively from an inactive position against a second elastic force exerted by the second restoring element (213, 223) in order to activate the electric braking means (2), **in that** the inactive positions of the first and second actuating devices (11, 12; 21, 22) are separated by a non-zero distance (D), **in that** said first and second actuating devices (11, 12; 21, 22) have respective displacement trajectories such that the second actuating device (21, 22) mechanically entrains the first actuating device (11, 12) after having reached an entrainment position separated from its inactive position by said non-zero distance (D), **in that** the second restoring force is smaller than the first restoring force, and **in that** the position sensor (3) supplies an output signal (S3) which is utilized to activate the electric braking means (2) and which varies as a function of the position of the second actuating device (21, 22) between its inactive position and its entrainment position.

2. Device according to Claim 1, **characterized in that** the first actuating device (11, 12) comprises a first pedal (11) including a first lever (111) pivoted to a support (4) and a first pressure shoe (112) fixed to this first lever (111), **in that** the second actuating device (21, 22) comprises a second pedal (21) including a second lever (211) and a second pressure shoe (212) fixed to this second lever (211), **in that** the second lever (211) is pivoted to the first lever (111), and **in that** the second shoe (212) covers the first shoe (112) at least in the entrainment position of the second actuating device (21).

3. Device according to Claim 2, **characterized in that** said sensor (3) comprises a rotation sensor (3) which is sensitive to angular displacement of the second lever (211) with respect to the first lever (111).

4. Device according to either of Claims 2 and 3, **characterized in that** it additionally comprises an electrical brake light switch (5) which is mounted on one of the first and second levers (111, 211) and is sensitive to the relative rotational movement of these levers (111, 211).

5. Device according to Claim 1, **characterized in that** the first actuating device (11, 12) comprises a piston (12) mounted slidably in a master cylinder (101) of the hydraulic control circuit (10) of the dissipative braking means (1), this piston (12) being returned to its inactive position by the first restoring element (123), **in that** this piston (12) has a contact face (121) and a first stop (122) spaced from the contact face (121), **in that** the second actuating device (21, 22) comprises a push rod (22) having a free end (221a), a second stop (222), and a connected end (221b), **in that** this rod (22) is entrained selectively by its connected end (221b) by means of a brake pedal (102) which is pivoted to a support (4) and actuation of which causes the free end (221a) of the push rod (22) to slide with respect to said first stop (122), **in that** in the inactive position of the second actuating device (22) the free end (221a) of the push rod (22) is separated from the contact face (121) of the piston (12) by said non-zero distance (D), and **in that** the second restoring element (223) is arranged between the first and second stops (122, 222).

6. Device according to Claim 5, **characterized in that** said sensor (3) comprises a rotation sensor (3) which is sensitive to angular displacement of the brake pedal (102) with respect to the support (4).

7. Device according to Claim 5, **characterized in that** said sensor (3) comprises a linear position sensor supplying an output signal (S3) which varies with the position of the second stop (222) with respect to the first stop (122).

8. Device according to any one of Claims 5 to 7, **characterized in that** the free end (221a) of the push rod (22) is at least partially spherical, and **in that** the push rod (22) is guided in the master cylinder (101) by its free end (221a).
